(19) Europäisches Patentamt
European Patent Office
Office européen des brevets

(11) EP 1 694 765 B1

(12) **EUROPEAN PATENT SPECIFICATION**

(45) Date of publication and mention of the grant of the patent:
**21.03.2007 Bulletin 2007/12**

(21) Application number: **04808755.5**

(22) Date of filing: **02.12.2004**

(51) Int Cl.:
*C08L 23/04* (2006.01) *C08L 23/12* (2006.01)
*C08L 23/16* (2006.01) *C08L 23/26* (2006.01)
*C08J 3/24* (2006.01)

(86) International application number:
**PCT/NL2004/000839**

(87) International publication number:
**WO 2005/054360 (16.06.2005 Gazette 2005/24)**

(54) **PROCESS FOR THE PREPARATION OF A THERMOPLASTIC ELASTOMERIC VULCANIZATE**

VERFAHREN ZUR HERSTELLUNG EINES THERMOPLASTISCHEN ELASTOMEREN VULKANISATS

PROCEDE POUR LA FABRICATION D'UNE COMPOSITION THERMOPLASTIQUE ELASTOMERE VULCANISEE

(84) Designated Contracting States:
**AT BE BG CH CY CZ DE DK EE ES FI FR GB GR HU IE IS IT LI LT LU MC NL PL PT RO SE SI SK TR**

(30) Priority: **05.12.2003 EP 03078811**
**05.12.2003 US 526994 P**

(43) Date of publication of application:
**30.08.2006 Bulletin 2006/35**

(73) Proprietor: **Stichting Dutch Polymer Institute**
**5612 AB Eindhoven (NL)**

(72) Inventors:
- **NOORDERMEER, Jacobus, Wilhelmus, Maria**
  **NL-6118 BV Nieuwstadt (NL)**
- **NASKAR, Kinsuk**
  **NL-7522 MJ Enschede (NL)**

(74) Representative: **Dorrestijn, Antoon et al**
**DSM Intellectual Property**
**P.O. Box 9**
**6160 MA Geleen (NL)**

(56) References cited:

**EP-A- 0 770 645**
**EP-A- 1 203 790**
**EP-A- 1 362 893**
**WO-A-91/00301**
**US-A- 4 143 099**
**US-A- 5 770 670**
**US-A- 6 093 781**
**US-B1- 6 310 140**

- **PATENT ABSTRACTS OF JAPAN vol. 0051, no. 11 (C-063), 18 July 1981 (1981-07-18) & JP 56 050945 A (TOAGOSEI CHEM IND CO LTD), 8 May 1981 (1981-05-08)**
- **PATENT ABSTRACTS OF JAPAN vol. 0080, no. 67 (C-216), 29 March 1984 (1984-03-29) & JP 58 219250 A (MITSUBISHI MONSANTO KASEI KK), 20 December 1983 (1983-12-20)**
- **PATENT ABSTRACTS OF JAPAN vol. 1995, no. 02, 31 March 1995 (1995-03-31) & JP 06 306209 A (NIPPON OIL & FATS CO LTD), 1 November 1994 (1994-11-01)**

EP 1 694 765 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a process for the preparation of a thermoplastic elastomeric vulcanizate (TPV) comprising a mixture of a polyolefin and a vulcanized rubber, in which the vulcanization of the rubber is performed at elevated temperature under the influence of a peroxide.

Such a process is disclosed in EP-A-72,203.

The emergence of thermoplastic elastomers (TPEs) in the 1950s provided a new horizon to the field of polymer science and technology. A TPE is a rubbery material with properties and functional performance similar to those of conventional vulcanized rubber at ambient temperature, yet it can be processed in a molten condition as a thermoplastic polymer at elevated temperature. The sort of TPEs based on polyolefin rubber/thermoplastic polymer compositions has grown along two distinctly different product-lines or classes: one class consists of simple blends and is commonly designated as thermoplastic elastomeric olefins (TEO); in the other class, the rubber phase is (dynamically) vulcanized, giving rise to a thermoplastic vulcanizate (TPV). Morphologically, TPVs are characterized by the presence of finely dispersed crosslinked rubber particles distributed in a continuous thermoplastic matrix. If the elastomer particles of such a blend are small enough and if they are sufficiently vulcanized, then the physical and chemical properties of the blend are generally improved.

TPVs based on polypropylene (PP) and EPDM-rubber blends are the most important representatives of this class of materials. Several crosslinking agents are employed to crosslink the EPDM rubber in PP/EPDM blends. Each and every crosslinking system has its own merits and demerits. Crosslinking systems often used for that purpose are activated phenol-formaldehyde resins, commonly known as resols. However, there are two major problems associated with TPVs based on these resol resins:

(a) hygroscopicity, even at ambient temperature; the absorbed moisture must be removed through lengthy, high-temperature drying procedures before processing, to eliminate product defects; and
(b) appearance of a very dark brownish color, which is difficult to mask and sometimes necessitates the use of two different pigment systems to achieve a desired color.

These disadvantages of the resols impose a demand for alternative crosslinking agents. Crosslinking of rubber with peroxides has been well known for more than fifty years. The general advantages of peroxides as crosslinking agents are: their ability to crosslink unsaturated as well as saturated elastomers; good high temperature resistance and good elastic behaviour (compression set), particularly at elevated temperature, no moisture uptake, and no staining or discoloration of the finished products. A co-agent is often used to improve the crosslinking efficiency of the peroxide by a tighter network formation.

Besides the advantages of peroxides, there are also disadvantages. Depending on the composition of the peroxide applied, the decomposition products are more or less volatile. The latter often provide a typical smell, show a blooming effect or can be extracted from the crosslinked compound by solvents. For instance, the typical sweet smell of acetophenone, one of the decomposition products of dicumyl peroxide (DCP) is well known. Also blooming phenomena take place due to the formation of dihydroxy isopropyl benzene from the decomposition of di(tert-butylperoxyisopropyl)-benzene.

The use of a peroxide also negatively influences the physical properties of the final TPV, as the peroxide also reacts with the polyolefin used as the matrix. In the case the polyolefin is a polyethylene, the peroxide can cause crosslinking of the polyethylene, as a result of which the processability is reduced. In the case the polyolefin is a polypropylene, the peroxide can cause degradation of the polymer chain, with detrimental effect on the mechanical properties.

To overcome the above problems, a new process has been found, which reduces or even eliminates them.

The process according to the present invention is characterized in that the peroxide, that is used for the vulcanization of the rubber is an organic peroxide having at least one terminal carbon-carbon double bond in the molecule.

In the following the ingredients and the process conditions used for the preparation of the TPV will be discussed.

### A. The polyolefin

The polyolefin resin in a TPV is selected from the group comprising one or more polyolefins originating from a (co-)polymerization of an $\alpha$-olefin, such as ethylene, propylene, butene-1 and others, as well as the crystalline polycycloolefins. They have to behave like a thermoplastic and have a DSC crystallinity of at least 15%. A preference is present for homo- and copolymers of polyethylene and polypropylene; in the case of copolymers of said polyolefins the content of ethylene resp. propylene in said copolymer is at least 75 wt%.

B. The rubber

The rubber in the TPV used according to the present invention can be any rubber known in the art, provided that the rubber is peroxide crosslinkable. For an overview of peroxide vulcanizable rubbers, the reader is referred to the article of Peter R. Dluzneski, in Rubber Chem. Techn., 74, 451 ff, 2001. Rubbers preferably useful are rubbers selected from the group comprising ethylene/α-olefin copolymer rubber (EAM) as well as ethylene/α-olefin/diene terpolymer rubber (EADM) and acrylonitrile/butadiene rubber (NBR); and its hydrogenated form (HNBR). The rubber can also be a styrene based thermoplastic elastomer (STPE). An STPE is a block copolymer comprising at least one block substantially based on poly(vinyl aromatic monomer), typically a polystyrene block, and at least one elastomeric block substantially based on poly(conjugated diene), typically a polybutadiene or polyisoprene block or a poly(isobutadiene-co-isoprene) block. The elestomeric block(s) may comprise other copolymerizable monomers, and may be partially or fully hydrogenated.

The polystyrene may also be based on substituted styrenes, like α-methylstyrene. The styrene/diene molar ratio generally ranges from 50/50 to 15/85. A preferred form of STPE is at least one of styrene-butadiene-styrene blockcopolymers (SBS) and their partially or fully hydrogenated derivatives (SEBS). Another preferred form of STPE is a triblock copolymer based on polystyrene and vinyl bonded polyisoprene, and the (partially) hydrogenated derivatives thereof (such copolymers commercially being available from Kraton Polymers). Also polystyrenic blockcopolymers, like polystyrene block-poly(ethylene-co-propylene)-block polystyrene (SEEPS or SEPS), can be advantageously applied. In the case of an EAM or EADM rubber, the α-olefin in such a rubber is preferably propylene; in such a case the rubber is referred to as EP(D)M. It is also possible to use a mixture of the above mentioned rubbers.

C. The TPV

The TPV is a family of thermoplastic elastomers comprising a blend of the (semi-)crystalline polyolefin resin and the rubber dispersed in said resin. In general these blends comprise from 15-85 parts by weight of the polyolefin resin and correspondingly from 85-15 parts by weight of the rubber.

In the TPV the dispersed rubber is at least partially cured (i.e. vulcanized). Generally, the rubber in the TPV has a degree for vulcanization such that the amount of extractable rubber from the TPV (based on total amount of curable rubber) is less than 90%. The test to determine such an extractable amount is generally done with a solvent in which the polyolefin as well as the not-vulcanized rubber are soluble. A suitable and preferable solvent is boiling xylene.

To enjoy the best effects of the vulcanization, the TPV is preferably vulcanized to the extent that the amount of extractable rubber is less than 15%, more preferred even less than 5%.

D. The peroxide

The peroxide to be used to vulcanize the rubber is an organic peroxide having at least one terminal carbon-carbon double bond in the molecule. Preference is given to a such a peroxide, wherein the peroxide is an allyl functional peroxide. Examples of such type of peroxides can be found in EP-A-250,024.

It has been found that beneficial effects on mechanical properties as well as on the attack by the peroxide on the polyolefin are obtained, when the peroxide has a relative solubility ($\delta_r$) of at least 1, wherein $\delta_r$ is the ratio between the solubility-parameter of the peroxide ($\delta_{per}$) and the solubility-parameter of the polyolefin ($\delta_{po}$), both determined at 453 K.

The solubility parameter δ, and expecially the $\delta_{per}$ and the $\delta_{po}$, are calculated using group contribution methods, based on the assumption that the contributions of different functional groups to this thermodynamic property are additive (see: A.F.M. Braton, "Handbook of Solubility Parameters and Other Cohesion Parameters", CRC Press, Boca Raton, 1985). Using the values of molar attraction constants given in P.A. Small, J. Appl. Chem. **3**, 71 (1953), the solubility parameters of the different peroxides and polymers can be calculated for 298 K. In order to correlate these values at 298 K with the temperature under vulcanization conditions, the solubility parameter values of the peroxides at 453 K are calculated using the following equation:

$$\ln \delta_T = \ln \delta_{298} - 1.25\alpha\ (T-298) \qquad -\ (1)\ -$$

where α = the coefficient of linear thermal expansion of the pertinent compound and T = 453 K. These α's are estimated from density measurements up to 353 K (see: A.H. Hogt, Proceedings of the Conference on Advances in Additives and Modifiers for Polymer) and are about $10^{-3}\ K^{-1}$. The solubility parameter values of the polymers (polyolefin and rubber) at 453 K are calculated using the following equation:

$$\ln \delta_T = \ln \delta_{298} - \alpha\ (T\text{-}298) \qquad \text{- (2) -}$$

(see S. Krause, in "Polymer Blends" (Eds. D.R. Paul and S. Newman), Vol. 1, Academic Press, New York, 1978, p. 15-113); where T = 453 K.

The coefficient of linear thermal expansion for polypropylene has a value of $6.3 \times 10^{-4}$ $K^{-1}$; for EPDM said value is $2.3 \times 10^{-4}$ $K^{-1}$ (see: D. W. Van Krevelen, "Properties of polymers, their correlation with chemical structure; Their numerical estimation and prediction from group additive contributions", Elsevier, Amsterdam, 1990, p. 189-225; and G. VerStrate, "Ethylene-Propylene Elastomers" in Encyclopedia of Polymer Science and Engineering, Vol. 6, 6th ed., John Wiley & Sons, 1986, p. 522-564). The δ-values at 453 K calculated for DCP, DTBT, TBCP and TBIB (peroxides used in the Examples and comparative experiments, see Table I), are 14.6, 19.6, 13.8 and 12.7 $(J/cm^3)^{1/2}$ respectively, whereas those of EPDM and PP are 16.6 and 15.1 $(J/cm^3)^{1/2}$. The ranking of these δ-values is graphically depicted in Figure 1.

From all these δ-values it can be deduced, that there is a tendency for TBIB, TBCP and DCP to preferably partition towards the polyolefin phase, as compared to DTBT which will show a preference towards the EPDM-phase.

More preferred, the $\delta_r$ has a value of at least 1.2. Even more preferred, the $\delta_{per}$ is at least equal to the solubility parameter of the rubber ($\delta_{rub}$); or in formula form:

$$\delta_{per} \geq \delta_{rubber} \qquad \text{- (3) –}$$

The beneficial effect of the use of a specific peroxide as per the present invention is preferably obtained when the peroxide has at least two carbon-carbon double bonds in the molecule. Another preference is in the use of a peroxide having a triazine nucleus in its molecule.

The amount of peroxide to be used is generally between 0.01 and 15 parts by weight per 100 parts of rubber. Preferably, the amount is 0.5-5.0 parts.

Next to the use of the specific peroxides as indicated above, the crosslinking can be influenced by the use of known crosslinking co-agents, as such known in the art. A preference is given for those co-agents, which solubility parameter ($\delta_{co}$, dertermined in the same way as all the other solubility parameters mentioned before) is at least equal to the $\delta_{po}$, and even more preferred at least equal to the $\delta_{rub}$. TAC with its very high δ-value, possibly added as a co-agent, preferably ends up in the rubber-phase, and therefore boosts the effect of rubber-crosslinking.

Regarding the terminal carbon-carbon double bonds present in the peroxide to be used in the present invention, a further preference is given to those peroxides, with formula

R'-O-O-R" -(4)-

in which both R' and R" have these terminal carbon-carbon double bonds. Their use even further reduces the generation of volatile byproducts from those peroxides, and thus further reduces the emission of volatile decomposition products from the produced TPV.

E. The preparation of the TPV

The TPV can either be prepared by mixing the polyolefin with a particulate form of the vulcanized rubber or via a process known as dynamic vulcanization. In the first process, the rubber is vulcanized under as such known conditions with the specific peroxides referred to above, and thereafter the rubber size is reduced, as a result of which the particle size is generally below 10 μm, more preferably below 1 μm. These resulting rubber particles can then be mixed with the polyolefin in a well known manner.

More preferred, the TPV is prepared under dynamic mixing of the polyolefin, the rubber, and the peroxide, as a result of which both the mixing of the rubber in the polyolefine, as well as the vulcanization of the rubber takes place. Information about dynamic vulcanization can for instance be obtained from the article of Coran & Patel in Rubber Chem. Techn., 53, 141 ff, 1980.

The process according to the present invention results in a TPV having improved properties compared to the TPV's known in the art. The unpleasant smell or blooming of the surface, assumed to be the result of volatile endproducts of the peroxides of the prior art, is greatly reduced. Especially when peroxides with a $\delta_r \geq 1$ are used, the reduction of the mechanical properties of the polyolefinic matrix is prevented.

The TPV (prepared) according to the present invention can succesfully be used in those applications where

the outstanding properties of the product, especially the high-temperature properties are of benefit. Reference can be made to automotive parts, especially under the hood (like clean air ducts, cable coating, boots and bellows, hoses), machinery, and domestic equipment. It can also be used in a hard/soft-combination, like coextrusion, sequential and 3D/2C (i.e. three dimensions and two components) extrusion, like for clean air ducts.

The TPV can especially be used to prepare a foamed thermoplastic elastomeric article. To foam the TPV, any method known in the art can be used. One or more chemical as well as physical blowing agents can be used (like azodicarbonamides, low boiling hydrocarbons, water, $N_2$, $CO_2$ or water releasing chemical compounds). The blowing agent(s) can be dry-blended or melt-blended with the TPV (provided that the blend-temperature is below the activation temperature of the blowing agent) or can be mixed in gaseous or liquid form in the molten TPV. Preferably, the TPV contains the blowing agent. The amount of blowing agent is dependent on the type of blowing agent: the more blowing gas is liberated per unit weight of blowing agent, the less is needed for a certain result. The person skilled in the art can readily ascertain the suitable effective amount of the appropriate blowing agent for the particular type of polymeric foam.

Next to the indicated compounds, the TPV of the present invention may contain additional ingredients, in itself known to be used in thermoplastic elastomers, like fillers, colourants, (UV) stabilizers plasticizers, flow-improvers, antioxidants, etc..

The invention also relates to an article comprising a TPV obtainable with a process of the present invention.

Applications in which the TPV of the present invention can be used are e.g.: belt strips; patch seals; soft touch (knobs-grips); sunvisors; vent seals; carpet backing; headliners; seating; run flat tires; sporting pads; wet suits; footwear; first aid equipment; fabric backing; diapers; tapes; different toys; blankets/pads; luggage; ducting; floats/bumpers; bandaids; ear plugs; cups; pads/mattresses; office furniture.

In Poster 13 of the International Rubber Conference 2003, held in Nürnberg from June 30 to July 3, 2003, a (process for the preparation of a) TPV is described, which uses an ENB-based EPDM as the rubber having a Mooney viscosity of 52, and a polypropylene with a meltindex of 0.3 g/10 min. TBIB as well as DTBT are used as peroxides. The poster does not recognize nor indicate that it is essential that the peroxides have a terminal unsaturation, not that a preference exists for terminal unsaturated peroxide with a $\delta_r \geq 1$. It also fails to indicate that improves TPV's can be made based on other polyolefins and rubbers.

The invention will be elucidated by means of the following Examples and comparative experiments, which are not meant to restrict the invention.

<u>Materials</u>

Ethylidene norbornene (ENB)-containing EPDM rubber, which includes 50 wt % of paraffinic oil, was obtained from DSM Elastomers B.V., the Netherlands. The EPDM contained 63 wt % of ethylene and 4.5 wt % of ENB; it had a Mooney viscosity, ML (1+4) @ 125° C of 52. Polypropylene (PP) was obtained from SABIC Polypropylenes B.V., the Netherlands. SEBS (type Kraton G1651 E) was obtained from Kraton Polymers B.V., the Netherlands. The melt flow index of the PP (measured at 503 K and 2.16 kg) was 0.3 g /10 min. Two stabilizers, Irganox® 1076 and Irgafos® 168 were obtained from Ciba Geigy. The chemical names and structures of four peroxides investigated are given in Table I as well as their decomposition temperatures corresponding to a half-life time of 1 hour, as determined in chlorobenzene solution.

Two types of multifunctional peroxides were synthesized at Akzo Nobel Polymer Chemicals, the Netherlands. They combine peroxide and co-agent functionality in a single molecule. Two conventional peroxides, DCP and TBCP, were employed as reference due to their structural similarity with the multifunctional peroxides. They were also obtained from Akzo Nobel Polymer Chemicals, the Netherlands. Triallyl cyanurate (TAC), 50% and $\alpha$-methyl styrene ($\alpha$-MeS), 99%, were used as references for the co-agents. For DCP, TAC was used as co-agent because of the structural similarity with DTBT; where as for TBCP, $\alpha$-MeS was applied as co-agent due to the structural similarity with TBIB.

In order to make a fair comparison among the various peroxides, care has to be taken, that with equal amounts of peroxides added per 100 grams of pure EPDM rubber, the amounts of the co-agent functionality per 100 grams of pure EPDM differ, depending on the amount of co-agent functionality provided by the peroxide itself. For example, if 15 milli-equivalents of peroxide was used, DTBT by its nature having two terminal allylic groups, provides 30 milli-equivalents of co-agent functionality. This level of 30 milli-equivalents of co-agent functionality was then taken as reference and a correction was applied to make up for the lack of co-agent functionality in the other recipes by adding either TAC or $\alpha$-MeS, as shown in Table II.

<u>Preparation of PP/EPDM TPVs</u>

The PP/EPDM TPV compositions employed are given in Tables III and IV. The experimental variables were the concentrations of peroxide and co-agent: (Table III) and the PP/EPDM blend ratio: (Table IV). All TPVs were prepared by mixing in a batch process in a Brabender Plasti-Corder PL-2000, having a mixing chamber volume of 50 cc. The

batch size was 36 grams. The mixer temperature was kept at 453-463K. A constant rotor (cam type) speed of 80 rpm was applied. First PP, stabilizers (Irganox 1076 and Irgafos 168) and EPDM rubber were mechanically melt-mixed. After 4 minutes of mixing, the co-agent, either TAC or α-MeS was added, followed by the peroxide. The mixing was continued for another 5 minutes to complete the dynamic vulcanization process. Immediately after mixing, the composition was removed from the mixer and while still molten, passed once through a cold two-roll mill to achieve a sheet of about 2 mm thick. The sheet was cut and pressed (2 mm thick) in a compression molding machine (WLP 1600/5*4/3 Wickert laboratory press at 473 K, 4 minutes and 12.5 MPa pressure). Aluminum foil was placed between the molded sheet and the press plates. The sheet was then cooled down to room temperature under pressure. Test specimens were die-cut from the compression molded sheet and used for testing after 24 hours of storage at room temperature.

Testing procedures

Tensile tests on the TPV's were carried out according to ISO 37 on dumb-bell shaped specimens (Type 2) using a Zwick tensile testing machine Z020 at a constant cross-head speed of 500 mm / min. The Young's modulus was determined from the initial slope of the stress-strain curve between 0.1 and 0.25 % strain at a cross-head speed of 50 mm / min. Hardness of the samples was measured by a Zwick Hardness-meter (Shore A Type, ISO R868).

The overall crosslink density of the EPDM phase in presence of PP was determined on the basis of equilibrium solvent-swelling measurements (cyclohexane at 296 K). A 2-mm thick sample was submerged in cyclohexane. After 24 hours, the cyclohexane was refreshed to remove the extracted oil and organic stabilizers. After another 24 hours, the swollen sample was weighed, dried and weighed again. From the degree of swelling an overall crosslink density was calculated, as expressed by (v + PP).

Examples I-VI and comparative experiments A-F

Influence of different types and concentrations of peroxides on the physical properties of TPV's at a fixed PP/EPDM blend ratio of 50 phr of PP

The mechanical properties of the PP/EPDM TPV's cured with various crosslinking agents at their different concentrations are given in Table III. For DTBT, there is a clear trend of increasing tensile strength with more crosslinking agent added.

An increase in the hardness values is noticed in all cases with increasing dosage of crosslinking agent (Table III). The average values of the hardness vary between 60-70 Shore A. The crosslinking system DTBT, without extra co-agent added, gives higher values than the others.

Examples VII-XVI and comparative experiments G-R

Influence of different types of peroxides at fixed concentrations on the physical properties of TPV's with various PP/EPDM blend ratios

The mechanical properties of the PP/EPDM TPV's,cured with various crosslinking agents and with various blend ratios, are given in Table IV. The properties corresponding to 50 phr PP were already given in Table III.

The data show that the tensile strength increases with increasing amount of PP. At 125 phr of PP, the multifunctional peroxide DTBT exhibits the highest tensile strength.

The results of elongation at break show quite different behavior for the four peroxides investigated. For DTBT, no significant dependence of elongation at break is observed for the various PP-contents.

The Young's modulus increases with increasing amount of PP; at 125 phr of PP, DTBT exhibits the highest value of Young's modulus. $M_{300}$ also increases with increasing amount of PP. An increase in the values of hardness takes place with increasing PP-content. Overall little difference is noticed between the various peroxides.

Examples XVII-VIII and comparative experiments S-T.

Examples III and VI, and comparative experiments C and F were repeated; EPDM was replaced by SEBS. In order to be comparable, in the recipe, 100 parts of oil were added, as the EPDM was also oil-extended. The results are given in Table V.

Avoidance of unpleasant smelling byproducts

It can be derived from Table VI that DCP primarily generates cumyloxy radicals, which further decompose into

acetophenone, having a typical sweet smell and highly reactive methyl radicals. Similarly, TBCP forms large quantities of acetophenone, as this compound still half resembles DCP. From the decomposition products of TBIB, it can be deduced that the amount of the aromatic alcohol and the aromatic ketone are below the detection limit (< 0.01 mol/mol decomposed peroxide); further no traces of other decomposition products could be identified. This implies that most of the initially formed aromatic decomposition products reacted with the substrate by the formation of adducts. As DTBT contains the same basic t-butyl peroxide unit as TBIB, it may be anticipated that its primary decomposition products will be similar. This also explains why the decomposition products obtained from the both multifunctional peroxides do not provide any unpleasant smell, unlike DCP.

As a result, the use of the multifunctional peroxides, like DTBT and TBIB, having both peroxide and co-agent functionality in a single molecule, provide TPV-properties, which are grossly comparable with commonly employed co-agent assisted peroxides. With co-agent TAC assisted DCP taken as reference for the overall combination of physical properties in PP/Rubber TPV's, particularly DTBT performs the better of the two. DTBT has a solubility parameter on the high side of the spectrum, which directs this peroxide/co-agent combination preferably to the Rubber-phase during mixing. The co-agent functionality of this compound helps to improve the crosslinking effect, so as to be comparable with DCP. DTBT further shows a decomposition-temperature related to a $t_{1/2}$ = 1 hour close to DCP, which results in a vulcanization rate, which is grossly comparable. Multifunctional peroxides might provide by-products after their decomposition, but without unpleasant smell unlike DCP.

Table I

CHEMICAL / COMMERCIAL NAMES, TEMPERATURE CORR. TO HALF-LIFE TIME OF 1 HR, AND STRUCTURES OF PEROXIDES STUDIED

| Chemical/ commercial name | T (K) for $t_{1/2}$ = 1 hour | Chemical structure |
|---|---|---|
| 1-(2-tert-Butylperoxyisopropyl)-3-isopropenyl benzene (TBIB) (71%): multifunctional | 411 | 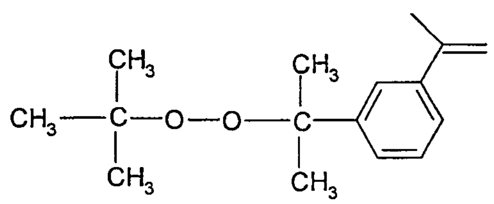 |
| 2,4-Diallyloxy-6-tert-butylperoxy-1,3,5-triazine (DTBT) (95%): multifunctional | 405 | 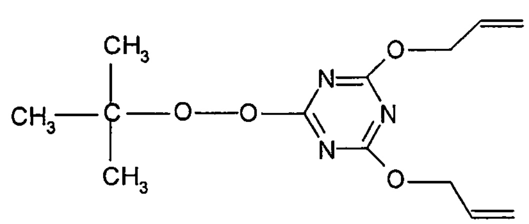 |
| Dicumyl peroxide (DCP) (Perkadox® BC-40B) (40%) | 401 | 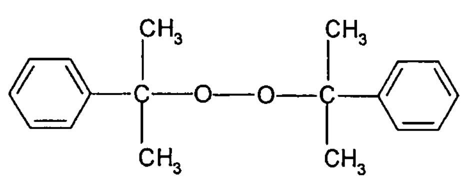 |

(continued)

CHEMICAL / COMMERCIAL NAMES, TEMPERATURE CORR. TO HALF-LIFE TIME OF 1 HR, AND STRUCTURES OF PEROXIDES STUDIED

| Chemical/ commercial name | T (K) for $t_{½}$ = 1 hour | Chemical structure |
|---|---|---|
| Tert-butyl cumyl peroxide (TBCP) (Trigonox® T) (50%) | 404 | 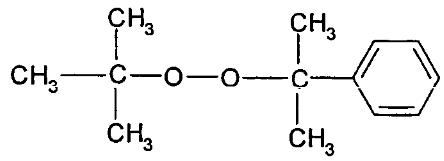 |
| ® Registered trademark of Akzo Nobel Chemicals B.V. | | |

Table II

CORRECTION FOR CO-AGENT FUNCTIONALITY

| Name of peroxide | Amount of peroxide (mmol) | Peroxide functionality (meq) | Co-agent functionality (meq) | Co-agent added extra (meq) |
|---|---|---|---|---|
| TBIB | 15 | 15 | 15 | 15 (α-MeS) |
| DTBT | 15 | 15 | 30 | - |
| DCP | 15 | 15 | - | 30 (TAC) |
| TBCP | 15 | 15 | - | 30 (α-MeS) |

**Table III TPV compositions (phr) and corresponding properties. Variation of peroxide and co-agent concentrations**

| Example / comp. exp. / Component | I | II | III | IV | V | VI | A | B | C | D | E | F |
|---|---|---|---|---|---|---|---|---|---|---|---|---|
| EPDM | 200 | 200 | 200 | 200 | 200 | 200 | 200 | 200 | 200 | 200 | 200 | 200 |
| PP | 50 | 50 | 50 | 50 | 50 | 50 | 50 | 50 | 50 | 50 | 50 | 50 |
| Peroxide: | | | | | | | | | | | | |
| TBIB | 1.7(5) | 3.4(10) | 5.1(15) | - | - | - | - | - | - | - | - | - |
| DTBT | - | - | - | 1.5(5) | 3.0(10) | 4.5(15) | - | - | - | - | - | - |
| DCP | - | - | - | - | - | - | 3.4(5) | 6.8(10) | 10.1(15) | - | - | - |
| TBCP | - | - | - | - | - | - | - | - | - | 2.1(5) | 4.2(10) | 6.3(15) |
| Co agent : | | | | | | | | | | | | |
| TAC | - | - | - | - | - | - | 1.7(10) | 3.4(20) | 5.1(30) | - | - | - |
| α-MeS | 0.6(5) | 1.2(10) | 1.8(15) | - | - | - | - | - | - | 1.2(10) | 1.8(15) | 3.6(30) |
| Stabilizers : | | | | | | | | | | | | |
| Irganox 1076 | 0.4 | 0.4 | 0.4 | 0.4 | 0.4 | 0.4 | 0.4 | 0.4 | 0.4 | 0.4 | 0.4 | 0.4 |
| Irgafos 168 | 0.4 | 0.4 | 0.4 | 0.4 | 0.4 | 0.4 | 0.4 | 0.4 | 0.4 | 0.4 | 0.4 | 0.4 |
| Mechanical properties | | | | | | | | | | | | |
| Tensile strength MPa) | 4.0 | 4.1 | 4.3 | 3.0 | 4.3 | 5.2 | 4.7 | 5.5 | 5.1 | 3.4 | 5.1 | 5.3 |
| Elongation at break (%) | 685 | 629 | 550 | 412 | 593 | 504 | 548 | 419 | 368 | 567 | 617 | 587 |
| Young's modulus (MPa) | 10.1 | 11.1 | 12.7 | 13.2 | 14.0 | 18.4 | 16.6 | 19.0 | 21.1 | 11.8 | 15.9 | 19.2 |
| Modulus 300% (MPa) | 2.3 | 2.4 | 2.9 | 2.7 | 2.9 | 3.6 | 3.2 | 4.4 | 4.4 | 2.4 | 2.9 | 3.4 |
| Hardness (Shore A) | 60 | 62 | 64 | 66 | 67 | 68 | 63 | 66 | 68 | 59 | 63 | 65 |
| Overall crosslink density ($\nu$+PP)x$10^5$ (mol/ml) | 2.3 | 2.9 | 5.5 | 2.1 | 4.5 | 8.4 | 7.5 | 16.0 | 17.5 | 2.8 | 4.7 | z7.8 |

[#] Includes 50 wt % paraffinic oil

[*] Numbers between brackets represent milli-equivalents of peroxides and co-agents per 100 parts of pure EPDM rubber

TABLE IV **Various polyolefin-rubber ratios**

| Example / comp. exp. Component | VII | VIII | IX | X | XI | XII | XIII | XIV | G | H | I | J | K | L | M | N | O | P | Q | R |
|---|---|---|---|---|---|---|---|---|---|---|---|---|---|---|---|---|---|---|---|---|
| EPDM | 200 | 200 | 200 | 200 | 200 | 200 | 200 | 200 | 200 | 200 | 200 | 200 | 200 | 200 | 200 | 200 | 200 | 200 | 200 | 200 |
| PP | 25 | 75 | 100 | 125 | 25 | 75 | 100 | 125 | 25 | 75 | 100 | 125 | 25 | 75 | 100 | 125 | 25 | 75 | 100 | 125 |
| Peroxide: | | | | | | | | | | | | | | | | | | | | |
| TBIB | 5.1 | 5.1 | 5.1 | 5.1 | - | - | - | - | - | - | - | - | - | - | - | - | - | - | - | - |
| DTBT | - | - | - | - | 4.5 | 4.5 | 4.5 | 4.5 | - | - | - | - | - | - | - | - | - | - | - | - |
| DCP | - | - | - | - | - | - | - | - | 10.1 | 10.1 | 10.1 | 10.1 | 10.1 | 10.1 | 10.1 | 10.1 | - | - | - | - |
| TBCP | - | - | - | - | - | - | - | - | - | - | - | - | - | - | - | - | 6.3 | 6.3 | 6.3 | 6.3 |
| Co-agent: | | | | | | | | | | | | | | | | | | | | |
| TAC | - | - | - | - | - | - | - | - | 5.1 | 5.1 | 5.1 | 5.1 | - | - | - | - | - | - | - | - |
| α-MeS | 1.8 | 1.8 | 1.8 | 1.8 | - | - | - | - | - | - | - | - | - | - | - | - | 3.6 | 3.6 | 3.6 | 3.6 |
| Stabilizers: | | | | | | | | | | | | | | | | | | | | |
| Iranox 1076 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| Irgafos 168 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| Mechanical properties | | | | | | | | | | | | | | | | | | | | |
| Tensile strength (Mpa) | 2.6 | 6.9 | 7.0 | 7.3 | 2.3 | 5.3 | 6.8 | 8.6 | 2.2 | 6.2 | 7.8 | 8.1 | 2.2 | 5.6 | 5.8 | 6.8 | 3.4 | 6.2 | 6.7 | 7.9 |
| Elongation at break (%) | 440 | 579 | 453 | 367 | 482 | 465 | 415 | 453 | 235 | 377 | 405 | 337 | 419 | 475 | 419 | 329 | 512 | 520 | 464 | 444 |
| Young's modulus (MPa) | 2.9 | 45.6 | 93.2 | 115.0 | 1.9 | 43.0 | 80.4 | 134.0 | 3.2 | 54.0 | 90.0 | 123.0 | 2.0 | 30.3 | 49 | 78 | 3.5 | 44.8 | 81.1 | 120.8 |
| Modulus 300% (MPa) | 2.0 | 4.7 | 6.1 | 6.9 | 1.6 | 4.4 | 6.1 | 7.4 | - | 5.4 | 6.6 | 7.8 | 1.8 | 4.3 | 5.1 | 6.6 | 2.2 | 4.7 | 5.7 | 7.1 |
| Hardness (Shore A) | 37 | 76 | 85 | 90 | 34 | 76 | 86 | 90 | 42 | 80 | 87 | 91 | 40 | 77 | 86 | 90 | 38 | 76 | 85 | 90 |
| Overall crosslink density $(\nu+PP)x10^5$ (mol/ml) | 5.8 | 12.0 | 14.1 | 17.9 | 4.3 | 11.6 | 15.3 | 19.5 | 13.4 | 22.1 | 25.3 | 29.2 | 5.1 | 13.9 | 15.1 | 17.0 | 5.0 | 12.7 | 14.0 | 20.1 |

TABLE V TPV compositions based on SEBS

| Example/comp. exp Component | XVII | XVIII | S | |
|---|---|---|---|---|
| SEBS (KG.1651 E) | 100 | 100 | 100 | 100 |
| Oil (Sunpar 150) | 100 | 100 | 100 | 100 |
| PP | 50 | 50 | 50 | 50 |
| Peroxide: | | | | |
| TBIB | 5.1 (15) | - | - | - |
| DTBT | - | 4.5(15) | - | - |
| DCP | - | - | 10.1 (15) | - |
| TBCP | - | - | - | 6.3 (15) |
| Co-agent: | | | | |
| TAC | - | - | 5.1 (30) | - |
| α-MeS | 1.8 (15) | - | - | 3.6 (30) |
| Stabilizers: | | | | |
| Irganox 1076 | 0.4 | 0.4 | 0.4 | 0.4 |
| Irgafos 168 | 0.4 | 0.4 | 0.4 | 0.4 |
| Mechanical Properties | | | | |
| Tensile strength (MPa) | 14.1 | 16.1 | 15.4 | 12.0 |
| Elongation at break (%) | 590 | 570 | 430 | 530 |
| Young's Modulus (MPa) | 12 | 12.4 | 8.7 | 9.5 |
| Modulus 300% (MPa) | 4.6 | 4.67 | 5.29 | 4.39 |
| Hardness (Shore A) | 68.3 | 69.1 | 70.1 | 66.5 |

TABLE VI
RELATIVE AMOUNTS OF DECOMPOSITION PRODUCTS FROM VARIOUS PEROXIDES

| Name of peroxide | Experimental temperature (K) | Decomposition products | Relative amount (mole/mole peroxide) |
|---|---|---|---|
| DCP | 433 | Methane | 0.91 |
| | | Acetophenone | 0.91 |
| | | 2-phenylpropanol-2 | 1.06 |
| | | α-methylstyrene | 0.01 |
| | | Water | 0.01 |
| TBCP | 428 | Methane | 0.57 |
| | | Acetone | 0.13 |
| | | tert-Butanol | 0.79 |
| | | Acetophenone | 0.44 |
| | | 2-Phenylpropanol-2 | 0.53 |
| TBIB | 428 | Methane | 0.63 |
| | | Acetone | 0.11 |
| | | tert-Butanol | 0.89 |

(continued)

RELATIVE AMOUNTS OF DECOMPOSITION PRODUCTS FROM VARIOUS PEROXIDES

| Name of peroxide | Experimental temperature (K) | Decomposition products | Relative amount (mole/mole peroxide) |
|---|---|---|---|
| | | 1-(2-isopropanol)-3-isopropenyl benzene | < 0.01 |
| | | 1-acetyl-3-isopropenyl benzene | < 0.01 |
| | | Water | 0.04 |
| DTBP | 425 | Methane | 0.24 |
| | | Acetone | 0.36 |
| | | tert-Butanol | 1.63 |
| | | Dimer of pentadecane | 0.40 |

**Claims**

**1.** Process for the preparation of a thermoplastic elastomeric vulcanizate (TPV) comprising a mixture of a polyolefin and a vulcanized rubber, in which the vulcanization of the rubber is performed at elevated temperature under the influence of a peroxide, wherein the peroxide is an organic peroxide having at least one terminal carbon-carbon double bond in the molecule.

**2.** Process according to claim 1, wherein the peroxide is an allyl functional peroxide.

**3.** Process according to anyone of claims 1-2, wherein the peroxide has a relative solubility ($\delta_r$) of at least 1, wherein $\delta_r$ is the ratio between the solubility-parameter of the peroxide ($\delta_{per}$) and the solubility-parameter of the polyolefin ($\delta_{po}$), both determined at 453 K.

**4.** Process according to claim 3, wherein $\delta_r$ has a value of at least 1.2.

**5.** Process according to anyone of claims 3-4, wherein the $\delta_{per}$ is at least equal to the solubility-parameter of the rubber ($\delta_{rub}$).

**6.** Process according to anyone of claims 1-5, wherein the TPV is prepared via dynamic vulcanization.

**7.** Process according to anyone of claims 1-6, wherein the polyolefin is selected from the group comprising polyethylene and polypropylene.

**8.** Process according to anyone of claims 1-7, wherein the rubber is selected from the group comprising EA(D)M, (hydrogenated), styrenic block copolymers, and (H)NBR rubber.

**9.** Process according to anyone of claims 1-8, wherein the peroxide has at least two carbon-carbon double bonds in the molecule.

**10.** Process according to anyone of claims 1-9, wherein the peroxide has a triazine nucleus in its molecule.

**11.** Process according to anyone of claims 1-10, wherein the TPV is prepared by dynamically vulcanizing a mixture of polypropylene, EPM or EPDM, and a peroxide having a triazine nucleus in its molecule.

**12.** Process according to anyone of claims 1-11, wherein the crosslink density of the rubber in the TPV, determined as a gel content in boiling xylene, is at least 90%.

**13.** Process according to claim 12, wherein the crosslink density is at least 95 %.

**14.** Process according to anyone of claims 1-13, wherein the amount of peroxide is from 0.5 to 5.0 parts by weight per hundred parts by weight of rubber.

**15.** Thermoplastic vulcanizate (TPV), obtainable by a process according to anyone of claims 1-14.

**16.** Article, comprising a TPV of claim 15, or a TPV prepared according to a process of anyone of claims 1-14.

## Patentansprüche

**1.** Verfahren zur Herstellung eines thermoplastischen elastomeren Vulkanisats (TPV), umfassend eine Mischung aus einem Polyolefin und einem vulkanisierten Kautschuk, wobei die Vulkanisation des Kautschuks bei erhöhter Temperatur unter dem Einfluss eines Peroxids durchgeführt wird, wobei das Peroxid ein organisches Peroxid mit mindestens einer endständigen Kohlenstoff-Kohlenstoff-Doppelbindung in dem Molekül ist.

**2.** Verfahren nach Anspruch 1, wobei das Peroxid ein allylfunktionales Peroxid ist.

**3.** Verfahren nach einem der Ansprüche 1 bis 2, wobei das Peroxid eine relative Löslichkeit ($\delta_r$) von mindestens 1 hat, wobei $\delta_r$ das Verhältnis zwischen dem Löslichkeitsparameter des Peroxids ($\delta_{per}$) und dem Löslichkeitsparameter des Polyolefins ($\delta_{po}$) ist, wobei beide bei 453K bestimmt werden.

**4.** Verfahren nach Anspruch 3, wobei $\delta_r$ einen Wert von mindestens 1,2 hat.

**5.** Verfahren nach einem der Ansprüche 3 bis 4, wobei das $\delta_{per}$ mindestens gleich dem Löslichkeitsparameter des Kautschuks ($\delta_{rub}$) ist.

**6.** Verfahren nach einem der Ansprüche 1 bis 5, wobei das TPV mittels dynamischer Vulkanisation hergestellt wird.

**7.** Verfahren nach einem der Ansprüche 1 bis 6, wobei das Polyolefin aus der Gruppe ausgewählt ist, die Polyethylen und Polypropylen umfasst.

**8.** Verfahren nach einem der Ansprüche 1 bis 7, wobei der Kautschuk aus der Gruppe ausgewählt ist, die EA(D)M, (hydriert), Styrolblockcopolymere und (H)NBR-Kautschuk umfasst.

**9.** Verfahren nach einem der Ansprüche 1 bis 8, wobei das Peroxid mindestens zwei Kohlenstoff-Kohlenstoff-Doppelbindungen in dem Molekül aufweist.

**10.** Verfahren nach einem der Ansprüche 1 bis 9, wobei das Peroxid einen Triazinkern in seinem Molekül aufweist.

**11.** Verfahren nach einem der Ansprüche 1 bis 10, wobei das TPV durch dynamisches Vulkanisieren einer Mischung von Polypropylen, EPM oder EPDM und einem Peroxid mit einem Triazinkern in seinem Molekül hergestellt wird.

**12.** Verfahren nach einem der Ansprüche 1 bis 11, wobei die Vernetzungsdichte des Kautschuks in dem TPV, bestimmt als Gelgehalt in siedendem Xylol, mindestens 90 % beträgt.

**13.** Verfahren nach Anspruch 12, wobei die Vernetzungsdichte mindestens 95 % beträgt.

**14.** Verfahren nach einem der Ansprüche 1 bis 13, wobei die Menge an Peroxid 0,5 bis 5,0 Gewichtsteile auf 100 Gewichtsteile Kautschuk beträgt.

**15.** Thermoplastisches Vulkanisat (TPV), das nach einem Verfahren nach einem der Ansprüche 1 bis 14 erhältlich ist.

**16.** Gegenstand, umfassend ein TPV nach Anspruch 15 oder ein TPV, das nach einem Verfahren nach einem der Ansprüche 1 bis 14 hergestellt ist.

## Revendications

**1.** Procédé de préparation d'un vulcanisat élastomère thermoplastique (TPV) comprenant un mélange d'une polyoléfine et d'un caoutchouc vulcanisé, dans lequel la vulcanisation du caoutchouc est effectuée à une température élevée sous l'influence d'un peroxyde, le peroxyde étant un peroxyde organique comportant au moins une double liaison

carbone-carbone terminale dans la molécule.

2. Procédé selon la revendication 1, dans lequel le peroxyde est un peroxyde à fonction allyle.

3. Procédé selon l'une quelconque des revendications 1-2, dans lequel le peroxyde a une solubilité relative ($\delta_r$) d'au moins 1, dans lequel $\delta_r$ est le rapport entre le paramètre de solubilité du peroxyde ($\delta_{per}$) et le paramètre de solubilité de la polyoléfine ($\delta_{po}$), tous deux déterminés à 453 K.

4. Procédé selon la revendication 3, dans lequel $\delta_r$ a une valeur d'au moins 1,2.

5. Procédé selon l'une quelconque des revendications 3-4, dans lequel le $\delta_{per}$ est au moins égal au paramètre de solubilité du caoutchouc ($\delta_{caout}$).

6. Procédé selon l'une quelconque des revendications 1-5, dans lequel le TPV est préparé par vulcanisation dynamique.

7. Procédé selon l'une quelconque des revendications 1-6, dans lequel la polyoléfine est choisie dans le groupe comprenant le polyéthylène et le polypropylène.

8. Procédé selon l'une quelconque des revendications 1-7, dans lequel le caoutchouc est choisi dans le groupe comprenant l'EA(D)M, (hydrogéné), les copolymères à blocs styréniques et le caoutchouc (H)NBR.

9. Procédé selon l'une quelconque des revendications 1-8, dans lequel le peroxyde possède au moins deux doubles liaisons carbone-carbone dans la molécule.

10. Procédé selon l'une quelconque des revendications 1-9, dans lequel le peroxyde possède un noyau triazine dans sa molécule.

11. Procédé selon l'une quelconque des revendications 1-10, dans lequel le TPV est préparé par vulcanisation dynamique d'un mélange de polypropylène, d'EPM ou d'EPDM, et d'un peroxyde comportant un noyau triazine dans sa molécule.

12. Procédé selon l'une quelconque des revendications 1-11, dans lequel la densité de réticulation du caoutchouc dans le TPV, déterminée comme étant la teneur en gel dans du xylène bouillant, est d'au moins 90 %.

13. Procédé selon la revendication 12, dans lequel la densité de réticulation est d'au moins 95 %.

14. Procédé selon l'une quelconque des revendications 1-13, dans lequel la quantité de peroxyde est de 0,5 à 5,0 parties en poids pour cent parties en poids de caoutchouc.

15. Vulcanisat thermoplastique (TPV), susceptible d'être obtenu par un procédé selon l'une quelconque des revendications 1-14.

16. Article comprenant un TPV selon la revendication 15, ou un TPV préparé par un procédé selon l'une quelconque des revendications 1-14.

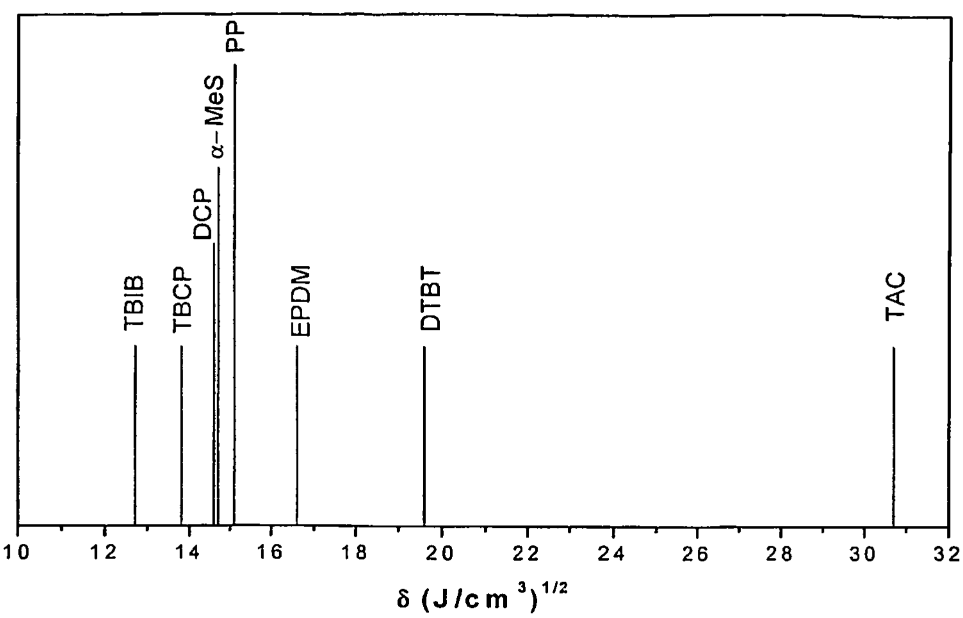
TBIB
TBCP
DCP
α−MeS
PP
EPDM
DTBT
TAC
10
12
14
16
18
20
22
24
26
28
30
32
δ (J/cm ³)^1/2

Figure 1